# EUROPÄISCHE PATENTSCHRIFT

(11) **EP 4 298 408 B1**
(45) Veröffentlichungstag und Bekanntmachung des Hinweises auf die Patenterteilung: **05.03.2025**
(21) Anmeldenummer: 22702248.0
(22) Anmeldetag: 27.01.2022
(51) Int. Cl.: G01F 15/18, G01F 1/58, G01F 1/66, G01F 1/84

(54) **MESSGERÄT**
MEASURING DEVICE
DISPOSITIF DE MESURE

(30) Priorität: 26.02.2021 DE 102021104631
(43) Veröffentlichungstag der Anmeldung: 03.01.2024
(73) Patentinhaber: Endress+Hauser Flowtec AG, 4153 Reinach (CH)
(72) Erfinder: ZHU, Hao, 85354 Freising (DE)
(74) Vertreter: Endress + Hauser Group Services (Deutschland) AG+Co. KG
(86) Internationale Anmeldenummer: PCT/EP2022/051855
(87) Internationale Veröffentlichungsnummer: WO 2022/179791

(56) Entgegenhaltungen:
- EP-A1- 0 253 504
- EP-A1- 0 759 542
- WO-A2-96/08697
- US-A1- 2001 006 007
- US-A1- 2015 001 846
- US-A1- 2017 115 142
- US-B1- 6 343 517

## Beschreibung

Die Erfindung betrifft ein Meßgerät zum Messen wenigstens einer Meßgröße eines fluiden Meßstoffs.

Aus der EP-A 18 92 30, der US-A 52 87 754, der US-A 2010/0236338, der US-A 2010/0257943, der US-A 2011/0265580, der US-A 2012/0279317, der US-A 2017/0219398, der US-A 2017/0261474, der US-A 2017/0356777, der US-A 2018/0087946, der US-A 46 55 089, der US-A 55 49 009, der US-B 63 43 517, der WO-A 2020/126285, der WO-A 2020/239319, der WO-A 02/052230, der WO-A 96/08697 oder der WO-A 98/38479 sind derartige Meßgeräte bekannt, wobei jedes Meßgeräte mittels jeweils einem dem Generieren wenigstens eines mit der wenigstens einen Meßgröße korrespondierenden Meßsignals dienlichen, beispielsweise einem vibronischen oder magnetisch-induktiven oder akustischen, Meßwandler und einer an den jeweiligen Meßwandler elektrisch angeschlossenen, dem Verarbeiten des wenigstens einen Meßsignals dienliche Meßgerät-Elektronik gebildet ist. Solche Meßgeräte können u.a. auch dafür verwendet werden, Meßwerte für wenigstens eine Meßgröße - insb. nämlich eines Massenstroms, eines Volumenstroms, einer Dichte, einer Viskosität, eines Drucks oder einer Temperatur - eines strömenden und/oder in einer Rohrleitung bzw. einem Rohrleitungssystem geführten fluiden Meßstoffs, beispielsweise einer Flüssigkeit, eines Gases oder einer Dispersion, zu ermitteln.

Jeder der Meßwandler umfaßt jeweils wenigstens eine - hier als als starres und/oder zumindest abschnittsweise kreiszylindrisches Rohr ausgebildete - Fluidleitung, einen - typischerweise bezüglich einer (gedachten) Längsachse rotationssymmetrischen - ersten Anschlußstutzen sowie einen - typsicherweise zum ersten Anschlußstutzen baugleichen und/oder bezüglich einer (gedachten) Längsachse rotationssymmetrischen - zweiten Anschlußstutzen.

Die Fluidleitung jedes der vorbezeichneten Meßwandler weist ein von einer Wandung, beispielsweise aus einem Metall, umhülltes, sich von einer in einem ersten Leitungsende der Fluidleitung verorteten ersten Strömungsöffnung bis zu einer in einem zweiten Leitungsende nämlicher Fluidleitung verorteten zweiten Strömungsöffnung erstreckendes Lumen auf und jeder der beiden Anschlußstutzen weist jeweils ein jeweils von einer Wandung aus einem Metall umhülltes, sich von einer in einem jeweiligen - typischerweise von einem (standardisierten) Anschlußflansch gefaßten - ersten Stutzenende des jeweiligen Anschlußstutzens verorteten jeweiligen ersten Strömungsöffnung bis zu einer in einem zweiten Stutzenende nämlichen Anschlußstutzens verorteten zweiten Strömungsöffnung erstreckenden, beispielsweise bezüglich einer (gedachten) Längsachse des ersten Anschlußstutzens rotationssymmetrischen, Lumen auf. Zudem ist die Fluidleitung sowohl mit deren ersten Leitungsende mit dem zweiten Leitungsende des ersten Anschlußstutzens als auch mit deren zweiten Leitungsende mit dem zweiten Leitungsende des zweiten Anschlußstutzens verbunden, derart, daß das Lumen der Fluidleitung unter Bildung eines sich erstreckende Fluidkanals mit sowohl dem Lumen des ersten Anschlußstutzens als auch dem Lumen des zweiten Anschlußstutzens kommuniziert bzw. daß die erste Strömungsöffnung der Fluidleitung in die zweite Strömungsöffnung des zweiten Anschlußstutzens und die zweite Strömungsöffnung der ersten Fluidleitung in die zweite Strömungsöffnung des zweiten Anschlußstutzens münden. Die erste Fluidleitung kann beispielsweise jeweils stoffschlüssig mit jedem der beiden Anschlußstutzen verbunden sein. Darüberhinaus kann die erste Fluidleitung ferner auch zumindest abschnittsweise gekrümmt, beispielsweise nämlich V-förmig und/oder U-förmig und/oder kreisbogenförmig ausgebildet sein. Desweiteren kann der Meßwandler wenigstens eine, typischerweise zur ersten Fluidleitung baugleiche, zweite Fluidleitung umfassen, wobei für diesen Fall die ersten und zweiten Fluidleitungen zudem mit deren jeweiligem ersten Leitungsende jeweils mit dem zweiten Leitungsende des - dann beispielsweise als Leitungsverzweigung ausgebildeten - ersten Anschlußstutzens und mit deren jeweiligem zweiten Leitungsende jeweils mit dem zweiten Leitungsende des - dann beispielsweise als Leitungsvereinigung ausgebildeten - zweiten Anschlußstutzens verbunden sein können.

Jeder der Meßwandler umfaßt weiters ein (Wandler-)Schutzgehäuse für die jeweiligen eine oder mehr Fluidleitungen. Das Schutzgehäuse weist jeweils eine von einer Wandung, typischerweise aus einem Metall, umhüllte Kavität auf, innerhalb der jede der Fluidleitungen plaziert ist. Zudem ist ein jeweiliges erstes bzw. zweites Gehäuse-Ende des Schutzgehäuses mittels eines der Anschlußstutzen gebildet, derart, daß das Schutzgehäuse eine zumindest anteilig die Kavität seitlich begrenzende Seitenwand aufweist, die seitlich sowohl am zweiten Leitungsende des ersten Anschlußstutzens als auch am zweiten Leitungsende des zweiten Anschlußstutzens fixiert bzw. damit jeweils stoffschlüssig verbunden ist. Die Anschlußstutzen und das Schutzgehäuse können dementsprechend beispielsweise auch integraler Bestandteil ein und derselben Baueinheit des Meßwandlers sein.

Wie in den eingangs erwähnten EP-A 18 92 30, US-A 52 87 754, US-B 63 43 517, US-A 2010/0257943, US-A 2017/0219398, US-A 2017/0261474, US-A 2017/0356777, US-A 46 55 089, US-A 55 49 009, WO-A 2020/126285, WO-A 2020/239319, WO-A 02/052230, WO-A 96/08697 bzw. WO-A 98/38479 jeweils gezeigt, können die Fluidleitungen der jeweiligen Meßwandler jeweils dafür eingerichtet sein, vom Meßstoff durchströmt und währenddessen vibrieren gelassen zu werden. Dementsprechend kann der Meßwandler ferner wenigstens einen mit der Meßgerät-Elektronik elektrisch verbundenen elektromechanischen Schwingungserreger zum Anregen bzw. Aufrechterhalten mechanischer Schwingungen, beispielsweise nämlich Biegeschwingungen, jeder der Fluidleitungen des Meßwandlers umfassen, der dafür eingerichtet ist, mittels eines von der Meßgerät-Elektronik generierten elektrischen Anregungssignals eingespeiste elektrische Leistung in mechanische Schwingungen zumindest einer Fluidleitung bewirkende mechanische Leistung zu wandeln. Zum

Erfassen von Schwingungen der Fluidleitungen und zum Erzeugen wenigstens eines mit einer oder mehreren Meßgrößen des in der Fluidleitung geführten Meßstoffs korrespondierenden, typischerweise elektrischen, Meßsignals umfaßt jeder der vorbezeichneten Meßwandler jeweils einen oder mehrere, typischerweise jeweils an der wenigstens einen Fluidleitung angebrachten und/oder zumindest jeweils in deren Nähe plazierten, Sensoren. Zudem ist die Meßgerät-Elektronik mit jedem der, beispielsweise elektrodynamischen oder optoelektrischen, Sensoren elektrisch verbunden und dafür eingerichtet, die jeweils gelieferten Meßsignale zu verarbeiten, beispielsweise nämlich mittels eines oder mehreren Meßsignalen Meßwerte für die wenigstens eine Meßgröße zu ermitteln.

Jeder der vorbezeichneten Meßwandler ist zudem dafür vorgesehen und eingerichtet, unter Bildung einer entsprechenden (Prozeß-)Meßstelle in ein Rohrleitungssystem eingegliedert zu werden; dies insb. derart, daß das erste Stutzenende des ersten Anschlußstutzens mit einem dem Meßwandler zugewandten, typischerweise von einem standardisierten bzw. zum Anschlußflansch des ersten Anschlußstutzens passenden Anschlußflansch gefaßten, Rohrende eines ersten geraden Rohrleitungssegments des Rohrleitungssystems und daß das erste Stutzenende des zweiten Anschlußstutzen mit einem dem Meßwandler zugewandten, typischerweise von einem standardisierten bzw. zum Anschlußflansch des zweiten Anschlußstutzens passenden Anschlußflansch gefaßten, Rohrende eines mit dem ersten Rohrleitungssegment fluchtenden geraden zweiten Rohrleitungssegments des Rohrleitungssystems fluidisch verbunden ist, insb. nämlich unter Bildung eines sich vom ersten Rohrleitungssegment bis zum zweiten Rohrleitungssegment erstreckende Fluidkanals. Dafür sind die ersten und zweiten Anschlußstutzen bei den vorbezeichneten Meßwandlern typischerweise so angeordnet und ausgerichtet, daß sie miteinander fluchten, derart, daß eine Verlängerung einer Längsachse des ersten Anschlußstutzens mit einer Verlängerung einer Längsachse des zweiten Anschlußstutzens koinzidiert.

Untersuchungen an Meßstellen der vorbezeichneten Art haben ergeben, daß die - typischerweise ortsfest bzw. unbeweglich verbauten - ersten und zweiten Rohrleitungssegmenten gelegentlich zueinander in erheblichem Maße versetzt sein können, derart, daß sie aufgrund eines solchen Versatzes nicht miteinander fluchten bzw. daß die Längsachsen der beiden Rohrleitungssegmente in Verlängerung nicht koinzident sind, beispielsweise nämlich zueinander parallel verschoben oder auch windschief sind, und/oder derart, daß ein einer Einbaulänge des Meßwandlers entsprechender (lichter) Abstand zwischen ersten und zweiten Rohrleitungssegmenten von einem dafür spezifizierten Abstand abweicht. Im Ergebnis dessen können in den Meßwandler unerwünschte mechanische Spannungen bzw. entsprechende (statische) Verformungen bewirkende Kräfte und/oder Momente, insb. nämlich in Richtung der Längsachse des ersten bzw. zweiten Anschlußstutzens wirkende (Zug-)Kräfte und/oder quer zur Längsachse wirkende (Quer-)Kräfte bzw. dementsprechende Biegemomente, in den Meßwandler eingeleitet werden; dies regelmäßig auch in der Weise, daß die wenigstens eine Fluidleitung auf eine in Richtung der Längsachse des ersten bzw. zweiten Anschlußstutzens von außene wirkende (Zug-)Kraft mit einer (Längs-)Dehnung reagiert, die größer ist als eine für nämliche Fluidleitung zulässige (Längs-)Dehnung, und/oder daß die wenigstes eine Fluidleitung auf eine von außen wirkende quer zur Längsachse des ersten bzw. zweiten Anschlußstutzens wirkende (Quer-)Kraft mit einer Krümmung reagiert, die größer ist als eine für nämliche Fluidleitung zulässige Krümmung. Damit einhergehend kann auch eine Meßgenauigkeit mit der das jeweilige Meßgerät die Meßwerte für wenigstens eine Meßgröße ermittelt, in erheblichem Maße herabgesetzt sein, insb. auch in der Weise, daß das jeweilige Meßgerät die spezifizierte Meßgenauigkeit nicht erfüllen kann.

Ausgehend davon besteht eine Aufgabe der Erfindung darin, Meßgeräte der in Rede stehenden Art dahingehend zu verbessern, daß ein allfälliger Versatz zwischen an den Meßwandler jeweils anzuschließenden Rohrleitungssegmenten eines jeweiligen Rohrleitungssystems bzw. damit einhergehend von außen via Anschlußstutzen in den Meßwandler eingetragene (Verformungs-)Kräften nicht zu unzulässig hohen Beeinträchtigungen der Meßgenauigkeit des jeweiligen Meßgeräts führen.

Zur Lösung der Aufgabe besteht die Erfindung in einem Meßgerät zum Messen wenigstens einer Meßgröße eines, beispielsweise in einer Rohrleitung geführten, fluiden Meßstoffs, welches Meßgerät umfaßt:
einen dem Generieren wenigstens eines mit der wenigstens einen Meßgröße korrespondierenden Meßsignals dienlichen, beispielsweise vibronischen oder magnetisch-induktiven oder akustischen, Meßwandler;
sowie eine an den Meßwandler elektrisch angeschlossene, dem Verarbeiten des wenigstens einen Meßsignals dienliche Meßgerät-Elektronik;
   wobei der Meßwandler
      ein (Wandler-)Schutzgehäuse ,
      einen, beispielsweise als Leitungsverzweigung ausgebildeten und/oder bezüglich einer (gedachten) Längsachse rotationssymmetrischen, ersten Anschlußstutzen mit einem von einer Wandung aus einem Metall umhüllten, sich von einer in einem, beispielsweise von einem Anschlußflansch gefaßten, ersten Stutzenende des ersten Anschlußstutzens verorteten ersten Strömungsöffnung bis zu einer in einem zweiten Stutzenende nämlichen ersten Anschlußstutzens verorteten zweiten Strömungsöffnung erstreckenden, beispielsweise bezüglich einer (gedachten) Längsachse des ersten Anschlußstutzens rotationssymmetrischen, Lumen,
      einen, beispielsweise zum ersten Anschlußstutzen baugleichen und/oder als Leitungsvereinigung dienlichen und/oder bezüglich einer (gedachten) Längsachse rotationssymmetrischen, zweiten Anschlußstutzen mit einem von einer Wandung, beispielsweise aus einem Metall, umhüllten, sich von einer in einem, beispielsweise von einem Anschlußflansch gefaßten, ersten Stutzenende des zweiten Anschlußstutzens verorteten ersten Strömungsöffnung bis zu einer in einem zweiten Stutzenende nämlichen zweiten Anschlußstutzens verorteten zweiten Strömungsöffnung erstreckenden, beispielsweise bezüglich einer (gedachten) Längsachse des zweiten Anschlußstutzens rotationssymmetrischen, Lumen,
      sowie eine, beispielsweise als starres und/oder zumindest abschnittsweise kreiszylindrisches Rohr ausgebildete, erste Fluidleitung mit einem von einer Wandung, beispielsweise aus einem Metall, umhüllten, sich von einer in einem ersten Leitungsende der ersten Fluidleitung verorteten ersten Strömungsöffnung bis zu einer in einem zweiten Leitungsende nämlicher ersten Fluidleitung verorteten zweiten Strömungsöffnung erstreckenden Lumen, aufweist;
   wobei die erste Fluidleitung sowohl mit deren ersten Leitungsende mit dem zweiten Leitungsende des ersten Anschlußstutzens als auch mit deren zweiten Leitungsende mit dem zweiten Leitungsende des zweiten Anschlußstutzens, beispielsweise jeweils stoffschlüssig, verbunden ist, beispielsweise derart, daß das Lumen der ersten Fluidleitung unter Bildung eines sich vom ersten Anschlußstutzen bis zum zweiten Anschlußstutzen erstreckende Fluidkanals mit sowohl dem Lumen des ersten Anschlußstutzens als auch dem Lumen des zweiten Anschlußstutzens kommuniziert und/oder derart, daß die erste Strömungsöffnung der ersten Fluidleitung in die zweite Strömungsöffnung des zweiten Anschlußstutzens und die zweite Strömungsöffnung der ersten Fluidleitung in die zweite Strömungsöffnung des zweiten Anschlußstutzens münden;
   wobei das (Wandler-)Schutzgehäuse eine von einer Wandung, beispielsweise aus einem Metall, umhüllte Kavität aufweist, innerhalb der die erste Fluidleitung plaziert ist;
   wobei ein erstes Gehäuse-Ende des Schutzgehäuses mittels des ersten Anschlußstutzens (100) und ein zweites Gehäuse-Ende des (Wandler-)Schutzgehäuses mittels des zweiten Anschlußstutzens gebildet ist, derart, daß das Schutzgehäuse eine zumindest anteilig die Kavität seitlich begrenzende Seitenwand aufweist, die sowohl am zweiten Leitungsende des ersten Anschlußstutzens als auch am zweiten Leitungsende des zweiten Anschlußstutzens fixiert bzw. damit jeweils stoffschlüssig verbunden ist.

Beim erfindungsgemäßen Meßgerät weist zudem zumindest der erste Anschlußstutzen in einem zwischen dessen ersten Stutzenenden und dessen das erste Gehäuse-Ende bildenden zweiten Stutzenenden verorteten, beispielsweise nämlich von dessen erstem Stutzenende und/oder vom ersten Gehäuse-Ende entfernten, Bereich einen Metallkompensator auf, beispielsweise derart, daß der erste Anschlußstutzen auf eine in Richtung einer Längsachse des ersten Anschlußstutzens wirkende (Zug-)Kraft im Bereich des Metallkompensators mit einer (Längs-)Dehnung reagiert, die größer ist als eine (Längs-)Dehnung mit der der erste Anschlußstutzen im Bereich des ersten Stutzenendes und/oder im Bereich des zweiten Stutzenendes auf nämliche (Zug-)Kraft reagiert und/oder daß der erste Anschlußstutzen auf eine eine, beispielsweise gerade, (Querkraft-)Biegung des ersten Anschlußstutzens bewirkende, quer zur Längsachse wirkende (Quer-)Kraft im Bereich des Metallkompensators mit einer Krümmung reagiert, die größer ist als eine Krümmung mit der der erste Anschlußstutzen im Bereich des ersten Stutzenendes und/oder im Bereich des zweiten Stutzenendes auf nämliche (Quer-)Kraft reagiert.

Darüberhinaus besteht die Erfindung ferner auch darin, ein solches Meßgerät zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines in einer Rohrleitung geführten fluiden Meßstoffs, beispielsweise eines Gases, einer Flüssigkeit oder einer Dispersion zu verwenden, beispielsweise auch derart, daß der erste Anschlußstutzen hinsichtlich einer Strömungsrichtung des durch den Meßwandler strömen gelassenen Meßstoffs einlaßseitig angeordnet ist und/oder daß der Meßstoff in einer vorgegebenen Strömungsrichtung durch die Rohrleitung sowie den in nämliche Rohrleitung eingegliederten Meßwandler strömen gelassen wird.

Nach einer ersten Ausgestaltung der Erfindung ist ferner vorgesehen, daß der erste Anschlußstutzen eingerichtet ist, auf eine in Richtung einer Längsachse des ersten Anschlußstutzens wirkende (Zug-)Kraft im Bereich des Metallkompensators mit einer (Längs-)Dehnung zu reagieren, die größer ist als eine (Längs-)Dehnung mit der der Anschlußstutzen im Bereich des ersten Stutzenende und/oder im Bereich des zweiten Stutzenendes auf nämliche (Zug-)Kraft reagiert.

Nach einer zweiten Ausgestaltung der Erfindung ist ferner vorgesehen, daß der erste Anschlußstutzen eingerichtet ist, auf eine eine, beispielsweise gerade, (Querkraft-)Biegung des ersten Anschlußstutzens bewirkende, quer zur Längsachse wirkende (Quer-)Kraft im Bereich des Metallkompensators mit einer Krümmung zu reagieren, die größer ist als eine Krümmung mit der der erste Anschlußstutzen im Bereich des ersten Stutzenendes und/oder im Bereich des zweiten Stutzenendes auf nämliche (Quer-)Kraft reagiert.

Nach einer dritten Ausgestaltung der Erfindung ist ferner vorgesehen, daß der Metallkompensator wenigstens eine, beispielsweise entlang einer kreisförmigen und/oder in sich geschlossenen Umfangslinie, umlaufende, beispielsweise als Sicke ausgebildete und/oder in sich geschlossene, Vertiefung aufweist.

Nach einer vierten Ausgestaltung der Erfindung ist ferner vorgesehen, daß der Metallkompensator durch wenigstens eine, beispielsweise entlang einer kreisförmigen und/oder in sich geschlossenen Umfangslinie, umlaufende, beispielsweise als Sicke ausgebildete und/oder in sich geschlossene, Vertiefung in der Wandung des ersten Ansuchlußstutzens gebildet ist.

Nach einer fünften Ausgestaltung der Erfindung ist ferner vorgesehen, daß der Metallkompensator integraler Bestandteil des ersten Anschlußstutzens, beispielsweise indem die Wandung des ersten Anschlußstutzens wenigstens eine, beispielsweise entlang einer kreisförmigen und/oder in sich geschlossenen Umfangslinie, umlaufende, beispielsweise als Sicke ausgebildete und/oder in sich geschlossene, Vertiefung aufweist.

Nach einer sechsten Ausgestaltung der Erfindung ist ferner vorgesehen, daß die Wandung des ersten Anschlußstutzens zum Bilden des Metallkompensators wenigstens eine, beispielsweise entlang einer kreisförmigen und/oder in sich geschlossenen Umfangslinie, umlaufende, beispielsweise als Sicke ausgebildete und/oder in sich geschlossene, Vertiefung aufweist und/oder abschnittsweise als Metallbalg ausgebildet ist. Diese Ausgestaltung der Erfindung weiterbildend ist ferner vorgesehen, daß die Wandung des ersten Anschlußstutzens zwei oder mehr in Strömungsrichtung hintereinander angeordnete, beispielsweise gleichgeformte, Vertiefungen aufweist und/oder daß die Wandung des ersten Anschlußstutzens zumindest abschnittsweise gewellt ist und/oder daß der erste Anschlußstutzen in Richtung der Längsachse wellenförmig variierende Innen-Durchmesser und gleichermaßen wellenförmig variierende Außen-Durchmesser aufweist.

Nach einer siebenten Ausgestaltung der Erfindung ist ferner vorgesehen, daß der Metallkompensator des ersten Anschlußstutzens als Wellrohrkompensator ausgebildet ist.

Nach einer achten Ausgestaltung der Erfindung ist ferner vorgesehen, daß der Metallkompensator des ersten Anschlußstutzens als Linsenkompensator ausgebildet ist.

Nach einer neunten Ausgestaltung der Erfindung ist ferner vorgesehen, daß der Metallkompensator des ersten Anschlußstutzens als Axialkompensator ausgebildet ist.

Nach einer zehnten Ausgestaltung der Erfindung ist ferner vorgesehen, daß der zweite Anschlußstutzen in einem zwischen dessen ersten Stutzenenden und dessen das erste Gehäuse-Ende bildenden zweiten Stutzenenden verorteten, beispielsweise nämlich von dessen erstem Stutzenende und/oder vom ersten Gehäuse-Ende entfernten, Bereich einen, beispielsweise integrierten und/oder als Axialkompensator ausgebildeten, Metallkompensator aufweist, beispielsweise derart, daß der Metallkompensator integraler Bestandteil des ersten Anschlußstutzens und/oder baugleich zum Metallkompensator des ersten Anschlußstutzens ist. Alternativ dazu kann der Meßwandler bzw. das damit gebildete Meßgerät auch so ausgestaltet sein, daß der zweite Anschlußstutzen keinen Metallkompensator aufweist.

Nach einer elften Ausgestaltung der Erfindung ist ferner vorgesehen, daß der Meßwandler eingerichtet ist, in ein Rohrleitungssystem eingegliedert zu werden, beispielsweise derart, daß das zweite Stutzenende des ersten Anschlußstutzens mit einem dem Meßwandler zugewandten Rohrende eines ersten Rohrleitungssegments des Rohrleitungssystems und/oder daß das zweitem Stutzenende des zweiten Anschlußstutzen mit einem dem Meßwandler zugewandten Rohrende eines zweiten Rohrleitungssegments des Rohrleitungssystems fluidisch, beispielsweise unter Bildung eines sich vom ersten Rohrleitungssegment bis zum zweiten Rohrleitungssegment erstreckende Fluidkanals und/oder Leckage frei, verbunden ist.

Nach einer zwölften Ausgestaltung der Erfindung ist ferner vorgesehen, daß die ersten und zweiten Anschlußstutzen miteinander fluchten, beispielsweise derart, daß eine Verlängerung einer Längsachse des ersten Anschlußstutzens zu einer Verlängerung einer Längsachse des zweiten Anschlußstutzens parallel ist oder damit koinzidiert.

Nach einer dreizehnten Ausgestaltung der Erfindung ist ferner vorgesehen, daß die erste Fluidleitung dafür eingerichtet ist, vom Meßstoff durchströmt und währenddessen vibrieren gelassen zu werden.

Nach einer vierzehnten Ausgestaltung der Erfindung ist ferner vorgesehen, daß die erste Fluidleitung zumindest abschnittsweise, beispielsweise V-förmig und/oder U-förmig und/oder kreisbogenförmig, gekrümmt ist.

Nach einer fünfzehnten Ausgestaltung der Erfindung ist ferner vorgesehen, daß die erste Fluidleitung zumindest abschnittsweise gerade, beispielsweise nämlich hohlzylindrisch, ist.

Nach einer sechzehnten Ausgestaltung der Erfindung ist ferner vorgesehen, daß die Meßgerät-Elektronik dafür eingerichtet ist, ein elektrische Treibersignal in den Meßwandler einzuspeisen.

Nach einer ersten Weiterbildung der Erfindung umfaßt das Meßgerät weiters wenigstens eine, beispielsweise als starres und/oder zumindest abschnittsweise kreiszylindrisches Rohr ausgebildete und/oder zur ersten Fluidleitung baugleiche, zweite Fluidleitung mit einem von einer Wandung, beispielsweise aus einem Metall, umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen, wobei die zweite Fluidleitung mit deren ersten Leitungsende mit dem zweiten Leitungsende des ersten Anschlußstutzens und mit deren zweiten Leitungsende mit dem zweiten Leitungsende des zweiten Anschlußstutzens verbunden ist, beispielsweise derart, daß sowohl das Lumen der ersten Fluidleitung als auch das Lumen der zweiten Fluidleitung mit dem Lumen der ersten Fluidleitung kommunizieren und/oder derart, daß die erste Strömungsöffnung der zweiten Fluidleitung in die zweite Strömungsöffnung der ersten Fluidleitung und die erste Strömungsöffnung der dritten Fluidleitung in die dritte Strömungsöffnung der ersten Fluidleitung münden. Die zweite Fluidleitung kann ferner auch dafür eingerichtet sein, beispielsweise simultan zur ersten Fluidleitung, vom Meßstoff durchströmt und währenddessen, beispielsweise simultan zur ersten Fluidleitung, vibrieren gelassen zu werden.

Nach einer zweiten Weiterbildung der Erfindung umfaßt das Meßgerät weiters wenigstens einen, beispielsweise elektromechanischen bzw. elektrodynamischen, Schwingungserreger zum Anregen bzw. Aufrechterhalten mechanischer Schwingungen, beispielsweise Biegeschwingungen, zumindest der ersten Fluidleitung, beispielsweise auch zum Anregen bzw. Aufrechterhalten mechanischer Schwingungen sowohl der ersten Fluidleitung als auch einer zweiten Fluidleitung. Dafür kann zudem die Meßgerät-Elektronik mit dem Schwingungserreger elektrisch gekoppelt sein, beispielsweise um mittels eines elektrischen Treibersignals elektrische Leistung in den Schwingungserreger einzuspeisen, bzw. kann der Schwingungserreger zudem dafür eingerichtet sein, von der Meßgerät-Elektronik, beispielsweise mittels eines elektrischen Treibersignals, eingespeiste elektrische Leistung in mechanische Schwingungen zumindest der ersten Fluidleitung bewirkende mechanische Leistung zu wandeln.

Nach einer dritten Weiterbildung der Erfindung umfaßt das Meßgerät weiters wenigstens einen, beispielsweise zumindest an der ersten Fluidleitung angebrachten und/oder zumindest in deren Nähe plazierten, ersten Sensor zum Erzeugen wenigstens eines mit einer Meßgröße eines im Fluidleitungssystem geführten Fluids korrespondierenden Signalparameter aufweisenden, beispielsweise elektrischen, ersten Meßsignals. Zudem kann die Meßgerät-Elektronik mit dem ersten Sensor elektrisch gekoppelt und dafür eingerichtet sein, das wenigstens erste Meßsignal zu verarbeiten, beispielsweise nämlich mittels des ersten Meßsignals Meßwerte für die wenigstens eine Meßgröße zu ermitteln.

Ein Grundgedanke der vorliegenden Erfindung besteht darin, mittels des wenigstens einen Metallkompensators zum einen allfällig von außen, nämlich vom angeschlossenen Rohrleitungssystem via Anschlußstutzen in den Meßwandler des jeweiligen Meßgeräts eingetragene (Verformungs-)Kräfte von der wenigstens einen Fluidleitung des Meßwandlers bzw. der wenigstens einen Fluidleitung und dem umhüllenden (Wandler-)Schutzgehäuse fernzuhalten, indem die aus den (Verformungs-)Kräften resultierenden mechanischen Spannungen innerhalb wenigstens eines der beiden Anschlußstutzen soweit abgebaut werden, daß stets sowohl die Fluidleitung als auch das (Wandler-)Schutzgehäuse keine oder nur vernachlässigbar geringe Verformungen erfährt, und zum anderen dennoch eine ansonsten hohe mechanische Stabilität der Anschlußstutzen und des Meßwandlers insgesamt zu gewährleisten.

Die Erfindung basiert u.a. auch auf der überraschende Erkenntnis, daß die Verwendung eines oder mehr Anschlußstutzen mit jeweils einem Metallkompensator zunächst zwar einen höheren Aufwand bei der Herstellung des Meßwandlers und darüberhinaus auch eine Beeinträchtigung der Strömungseigenschaften des Meßwandlers, einschließlich dessen Strömungswiderstands nach sich ziehen mag, daß aber die Integration des wenigstens einen Metallkompensators in den Meßwandler und dessen Berücksichtigung bei Kalibrierung des Meßwandlers letztlich zu einer erheblich verbesserte, die vorgenannten Nachteile kompensierenden Meßgenauigkeit auch bei versetzt angeordneten Rohrleitungssegmenten führen kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: schematisch ein Ausführungsbeispiel für ein erfindungsgemäßes Meßgerät; und
- Fig. 2: schematisch eine weitere Variante für ein erfindungsgemäßes Meßgerät.

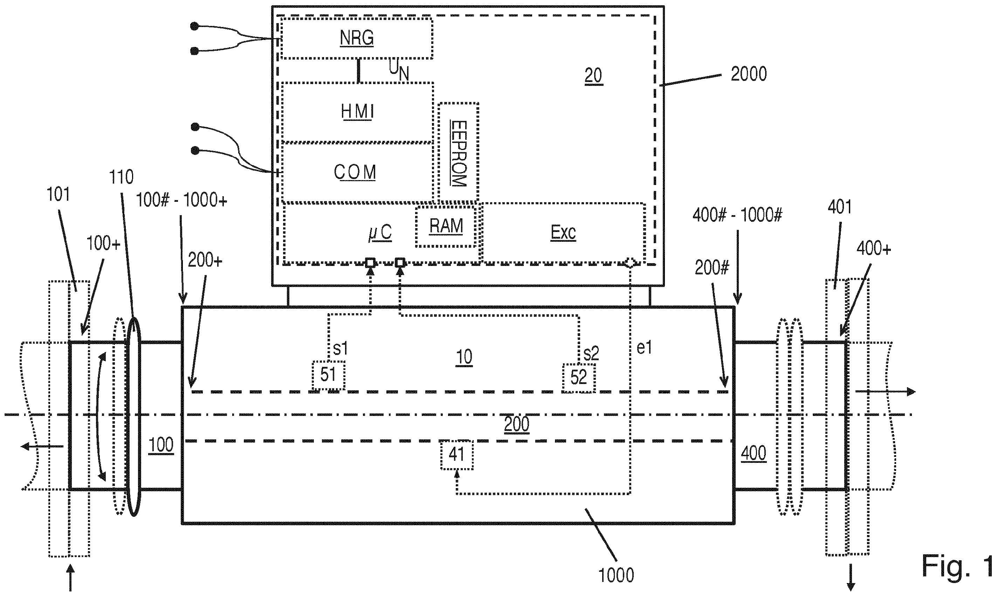

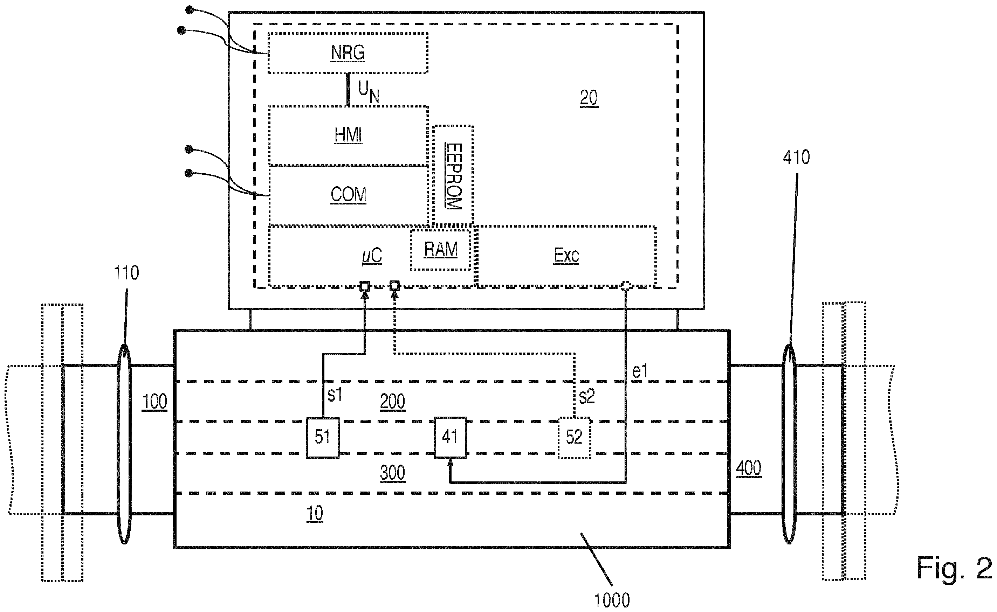

In der Fig. 1 bzw. 2 ist schematisch jeweils ein Meßgerät bzw. verschiedene, ggf. auch einander ergänzende Ausgestaltungvarianten eines solchen Meßgeräts gezeigt, das insbesondere dafür vorgesehen ist Meßwerte für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines in einer Rohrleitung geführten fluiden Meßstoffs, beispielsweise nämlich eines Gases, einer Flüssigkeit oder einer Dispersion, zu ermitteln. Das Meßgerät umfaßt einen dem Generieren wenigstens eines mit der wenigstens einen Meßgröße korrespondierenden, insb. nämlich wenigsten einen von der Meßgröße abhängigen Signalparameter aufweisenden und/oder elektrischen, Meßsignals s1 (s1, s2) dienlichen, insb. vibronischen oder magnetisch-induktiven oder akustischen, Meßwandler 10 sowie eine an den Meßwandler elektrisch angeschlossene, dem Verarbeiten des wenigstens einen Meßsignals s1 (s1, s2) dienliche Meßgerät-Elektronik 20. Die Meßgerät-Elektronik 20 kann, wie bei Meßgeräten der in Rede stehenden Art durchaus üblich, zudem in einem, beispielsweise metallischen und/oder explosionsfesten und/oder gegen Spritzwasser und/oder Staub dichten, Elektronik-Schutzgehäuse 2000 untergebracht sein.

Der Meßwandler 10 umfaßt wenigstens eine - beispielsweise als als starres und/oder zumindest abschnittsweise kreiszylindrisches Rohr ausgebildete - Fluidleitung 200, einen - beispielsweise bezüglich einer (gedachten) Längsachse rotationssymmetrischen - ersten Anschlußstutzen 100 sowie einen - beispielsweise zum ersten Anschlußstutzen baugleichen und/oder bezüglich einer (gedachten) Längsachse rotationssymmetrischen - zweiten Anschlußstutzen 400.

Die Fluidleitung 200 des Meßwandlers 10 weist ein von einer Wandung, beispielsweise aus einem Metall, wie etwa einem rostfreien (Edel-)Stahl, einer Titan-Legierung, einer Tantal-Legierung, einer Zirkonium-Legierung etc., umhülltes, sich von einer in einem ersten Leitungsende der Fluidleitung 200 verorteten ersten Strömungsöffnung bis zu einer in einem zweiten Leitungsende nämlicher Fluidleitung verorteten zweiten Strömungsöffnung erstreckendes Lumen auf und jeder der beiden Anschlußstutzen 100, 400 weist jeweils ein jeweils von einer Wandung aus einem Metall, beispielsweise einem rostfreien (Edel-)Stahl, umhülltes, sich von einer in einem jeweiligen - beispielsweise von einem (standardisierten) Anschlußflansch (101, 401) gefaßten - ersten Stutzenende 100+ bzw. 400+ des jeweiligen Anschlußstutzens 100, 400 verorteten jeweiligen ersten Strömungsöffnung bis zu einer in einem zweiten Stutzenende 100# bzw. 400# nämlichen Anschlußstutzens 100, 400 verorteten zweiten Strömungsöffnung erstreckenden, beispielsweise bezüglich einer (gedachten) Längsachse des jeweiligen Anschlußstutzens 100 bzw. 400 rotationssymmetrischen, Lumen auf. Zudem ist die Fluidleitung 200 sowohl mit deren ersten Leitungsende 200+ mit dem zweiten Leitungsende 100# des ersten Anschlußstutzens 100 als auch mit deren zweiten Leitungsende 200# mit dem zweiten Leitungsende 400# des zweiten Anschlußstutzens 400 verbunden, derart, daß das Lumen der Fluidleitung 200 unter Bildung eines sich durchgängig vom Anschlußstutzen 100 bis zum Anschlußstutzen 400 erstreckende Fluidkanals mit sowohl dem Lumen des ersten Anschlußstutzens 100 als auch dem Lumen des zweiten Anschlußstutzens 200 kommuniziert bzw. daß die erste Strömungsöffnung der Fluidleitung 200 in die zweite Strömungsöffnung des Anschlußstutzens 100 und die zweite Strömungsöffnung der Fluidleitung 200 in die zweite Strömungsöffnung des zweiten Anschlußstutzens 400 münden.

Die Fluidleitung 200 kann beispielsweise jeweils stoffschlüssig mit jedem der beiden Anschlußstutzen verbunden sein. Darüberhinaus kann die Fluidleitung 200 ferner auch zumindest abschnittsweise gerade, beispielsweise nämlich hohlzylindrisch, und/oder zumindest abschnittsweise gekrümmt, beispielsweise nämlich V-förmig und/oder U-förmig und/oder kreisbogenförmig ausgebildet sein. Desweiteren kann der Meßwandler, wie auch in Fig. 2 angedeutet, wenigstens eine, beispielsweise zur Fluidleitung 200 baugleiche, zweite Fluidleitung 300 umfassen, wobei für diesen Fall die wenigstens zwei Fluidleitungen 200, 300 zudem mit deren jeweiligem ersten Leitungsende 200+, 300+ jeweils mit dem zweiten Leitungsende 100# des - dann beispielsweise als Leitungsverzweigung ausgebildeten - Anschlußstutzens 100 und mit deren jeweiligem zweiten Leitungsende 200#, 300# jeweils mit dem zweiten Leitungsende 400# des - dann beispielsweise als Leitungsvereinigung ausgebildeten - Anschlußstutzens 400 verbunden sein können; dies im besonderen in der Weise, daß sowohl die Fluidleitung 200 mit deren ersten Leitungsende 200+ als auch die Fluidleitung 300 mit deren ersten Leitungsende 300+ jeweils mit dem zweiten Leitungsende 100# des Anschlußstutzens 100 und sowohl die Fluidleitung 200 mit deren zweiten Leitungsende 200# als auch die Fluidleitung 300 mit deren zweiten Leitungsende 300# jeweils mit dem zweiten Leitungsende 400# des Anschlußstutzens 400 verbunden sind, bzw. in der Weise, daß sowohl das Lumen der Fluidleitung 200 als auch das Lumen der Fluidleitung 300 mit dem Lumen des Anschlußstutzens 100 kommunizieren und/oder derart, daß die erste Strömungsöffnung der Fluidleitung 200 in die zweite Strömungsöffnung des Anschlußstutzens 100 und die erste Strömungsöffnung der Fluidleitung 300 in eine ebenfalls im Leitungsende 100# verortete dritte Strömungsöffnung des Anschlußstutzens 100 und die zweite Strömungsöffnung der Fluidleitung 200 in die zweite Strömungsöffnung des Anschlußstutzens 400 und die zweite Strömungsöffnung der Fluidleitung 300 in eine ebenfalls im Leitungsende 400# verortete dritte Strömungsöffnung des Anschlußstutzens 400 münden. Darüberhinaus kann der Meßwandler, falls erforderlich, weitere an die Anschlußstutzen angeschlossene und innerhalb des Schutzgehäuses 1000 untergebrachte Fluidleitungen aufweisen, beispielsweise nämlich wie u.a. in den eingangs erwähnten US-A 2010/0236338 oder US-A 2017/0261474 jeweils gezeigt, vier parallele und zumindest paarweise baugleiche Fluidleitungen oder wie in der eingangs erwähnten US-A 2012/0279317 vorgeschlagen, acht oder mehr Fluidleitungen.

Zum Erzeugen des wenigstens einen Meßsignals s1 umfaßt das Meßgerät nach einer weiteren Ausgestaltung der Erfindung wenigstens einen, beispielsweise zumindest teilweise an der wenigstens einen Fluidleitung 100 angebrachten und/oder zumindest in deren Nähe plazierten, ersten Sensor 1000. Zum Verarbeiten des Meßsignals s1, beispielsweise nämlich zum Ermitteln von Meßwerten für die wenigstens eine Meßgröße anhand des Meßsignals s1, kann zudem die Meßgerät-Elektronik mit dem Sensor 51 elektrisch gekoppelt sein.

Nach einer weiteren Ausgestaltung der Erfindung ist der Meßwandler als ein Meßwandler vom Vibrationstyp ausgebildet, derart, daß wenigstens eine von dessen Fluidleitungen, insb. jede von dessen von dessen Fluidleitungen, dafür eingerichtet ist, vom Meßstoff durchströmt und währenddessen vibrieren gelassen zu werden; für den vorbezeichneten Fall, daß zwei oder mehr Fluidleitungen vorgesehen sind beispielsweise auch simultan. Zum Anregen bzw. Aufrechterhalten mechanischer Schwingungen, beispielsweise nämlich Biegeschwingungen, zumindest der Fluidleitung 200, ggf. auch zum Anregen bzw. Aufrechterhalten mechanischer Schwingungen sowohl der Fluidleitung 200 als auch der Fluidleitung 300, umfaßt der Meßwandler bzw. das damit gebildete Meßgerät ferner wenigstens einen (elektromechanischen), beispielsweise nämlich elektrodynamischen oder elektromagnetischen, Schwingungserreger 41. Der Schwingungserreger 41 ist an die Meßgerät-Elektronik elektrisch angeschlossen und im besonderen zudem dafür eingerichtet, von der Meßgerät-Elektronik, beispielsweise nämlich mittels eines entsprechenden elektrischen Treibersignals e1 der Meßgerät-Elektronik, eingespeiste elektrische Leistung in mechanische Schwingungen zumindest der Fluidleitung 200 bewirkende mechanische Leistung zu wandeln; dies für den vorbezeichneten Fall, daß zwei Fluidleitungen (200, 300) vorgesehen sind, beispielsweise auch derart, daß die beiden Fluidleitungen (200, 300) gegengleiche (Biege-)Schwingungen ausführen. Nicht zuletzt für den vorbeschriebenen Fall, daß der Meßwandler 10 als ein Meßwandler vom Vibrationstyp ausgebildet ist, kann der Sensor 51 auch als ein, beispielsweise elektrodynamischer oder opto-elektrischer, Schwingungssensor ausgebildet sein. Alternativ oder in Ergänzung kann der Meßwandler 10 zum Erzeugen wenigstens eines ebenfalls mit der wenigstens einen Meßgröße korrespondierenden - insb. elektrischen - zweiten Meßsignals s2 ferner mit wenigstens einem, beispielsweise zumindest an der Fluidleitung 200 angebrachten und/oder zumindest in deren Nähe plazierten und/oder zum vorbezeichneten Sensor 51 baugleichen, zweiten (Schwingungs-)Sensor 52 ausgerüstet sein. Zudem kann die Meßgerät-Elektronik 20, beispielsweise gleichermaßen wie mit dem Sensor 51, auch mit dem Sensor 52 elektrisch gekoppelt und zudem dafür eingerichtet, dessen Meßsignal s2 zu verarbeiten, insb. mittels der ersten und zweiten Meßsignales s1, s2 Meßwerte für die wenigstens eine Meßgröße zu ermitteln, beispielsweise nämlich anhand einer zwischen den Meßsignalen etablierten Phasendifferenz Meßwerte für die Massendurchflußrate bzw. den Massendurchfluß zu berechnen.

Der Meßwandler 10 des erfindungsgemäßen Meßgeräts weist desweiteren ein (Wandler-)Schutzgehäuse 1000 mit einer von einer Wandung, beispielsweise aus einem Metall, insb. einem rostfeien (Edel-)Stahl, umhüllten Kavität auf, innerhalb der die wenigstens eine Fluidleitung 200 bzw. jeder der Fluidleitungen des Meßwandlers plaziert ist. Zudem ist ein erstes Gehäuse-Ende 1000+ des Schutzgehäuses 1000 ist mittels des Anschlußstutzens 100 und ein zweites Gehäuse-Ende 1000# des Schutzgehäuses 1000 mittels des Anschlußstutzens 400 gebildet, derart, daß das Schutzgehäuse 1000 eine zumindest anteilig dessen vorbezeichnete Kavität seitlich begrenzende Seitenwand aufweist, die seitlich sowohl am zweiten Leitungsende 100# des Anschlußstutzens 100 als auch am zweiten Leitungsende 400# des Anschlußstutzens 400 fixiert bzw. damit jeweils stoffschlüssig verbunden ist. Das Wandler-Schutzgehäuse 1000 kann zudem beispielsweise auch mit dem vorbezeichneten Elektronik-Schutzgehäuse für die Meßsystem-Elektronik unter Bildung eines Meßgeräts in Kompaktbauweise mechanisch fest verbunden sein, derart, daß das Elektronik-Schutzgehäuse 2000 direkt und/oder lediglich vom Wandlerschutz-Schutzgehäuse gehaltert ist.

Wie bereits erwähnt, ist der Meßwandler im besonderen dafür vorgesehen bzw. eingerichtet, in ein die vorbezeichnete Rohrleitung umfassendes (Rohrleitungs-)System eingegliedert zu werden, beispielsweise nämlich derart, daß das Stutzenende 100+ des Anschlußstutzens 100 mit einem dem Meßwandler 10 zugewandten Rohrende eines ersten Rohrleitungssegments des Rohrleitungssystems und/oder daß das Stutzenende 400+ des Anschlußstutzen 400 mit einem dem Meßwandler zugewandten Rohrende eines zweiten Rohrleitungssegments des Rohrleitungssystems fluidisch, insb. auch Leckage frei, verbunden ist, beispielsweise nämlich unter Bildung eines sich vom vorbezeichneten ersten Rohrleitungssegment bis zum vorbezeichneten zweiten Rohrleitungssegment durchgängig erstreckende Fluidkanals und/oder derart, daß der Meßstoff (im Betrieb) in einer vorgegebenen Strömungsrichtung durch die Rohrleitung sowie den darin eingegliederten Meßwandler strömen gelassen wird. Nach einer weiteren Ausgestaltung der Erfindung sind die Anschlußstutzen 100, 400 dementsprechend so angeordnet und ausgerichtet, daß sie miteinander fluchten, beispielsweise nämlich derart, daß eine Verlängerung einer Längsachse des Anschlußstutzens 100 zu einer Verlängerung einer Längsachse des Anschlußstutzens 400 parallel ist bzw. damit koinzidiert.

Um einen allfälligen Versatz zwischen den vorbezeichneten, an den Meßwandler jeweils anzuschließenden Rohrleitungssegmenten - beispielsweise derart, daß die Längsachsen der beiden Rohrleitungssegmente in Verlängerung zueinander parallel verschoben oder auch windschief sind und/oder derart daß ein Abstand zwischen den Rohrleitungssegmenten größer als ein einer Einbaulänge des Meßwandlers entsprechender Abstand zwischen den Stutzenenden 100+, 400+ ist - innerhalb des Meßwandlers ausgleichen zu können bzw. um zu verhindern, daß ein derartiger Versatz der Rohrleitungssegmente solche Kräfte und/oder Momente bzw. solche mechanischen Spannungen innerhalb des Meßwandlers verursacht, die die wenigstens eine Fluidleitung 200 in unzulässig hohem, nämlich die Meßgenauigkeit des Meßgeräts beeinträchtigendem Maße verformen können, weist beim erfindungsgemäßen Meßwandler zumindest der Anschlußstutzen 100 in einem zwischen dessen Stutzenenden 100+ und dessen das erste Gehäuse-Ende 1000+ bildenden Stutzenenden 100#, mithin außerhalb des Schutzgehäuses 1000 verorteten Bereich einen Metallkompensator 110 auf. Der Metallkompensator 110 dient insb. dazu, den Anschlußstutzen 100 dafür einzurichten, auf eine in Richtung von dessen Längsachse wirkende (Zug-)Kraft im Bereich des Metallkompensators 110 definiert mit einer (Längs-)Dehnung zu reagieren, die größer ist als eine (Längs-)Dehnung mit der der Anschlußstutzen 100 im Bereich des Stutzenendes 100+ und/oder im Bereich des Stutzenendes 100# auf nämliche (Zug-)Kraft jeweils reagiert. Alternativ oder in Ergänzung kann der Metallkompensator 110 auch dazu dienen, den Anschlußstutzen 100 dafür einzurichten, auf eine eine - beispielsweise als gerade Biegung und/oder als Querkraftbiegung ausgebildete- Biegung des Anschlußstutzens 100 bewirkende, quer zu dessen Längsachse wirkende (Quer-)Kraft bzw. ein am Stutzenden 100+ eingeleitetes Biegemoment im Bereich des Metallkompensators mit einer Krümmung zu reagieren, die größer ist als eine Krümmung mit der der Anschlußstutzen 100 im Bereich von dessen Stutzenende 100+ und/oder im Bereich von dessen Stutzenende 100# auf nämliche (Quer-)Kraft bzw. nämliches Biegemoment reagiert. Der vorbezeichnete Bereich des Anschlußstutzens 100 bzw. der darin vorgesehene Metallkompensator 110 kann dementsprechend beispielsweise unmittelbar an das Gehäuse-Ende 1000+ angrenzen oder, wie auch in der Fig. 1 schematisch dargestellt, sowohl vom Stutzenende 100+ als vom Gehäuse-Ende 1000+ entfernt sein. Je nach Anwendungsfall bzw. je nach Art des zu kompensierenden Versatzes kann der Metallkompensator 110 beispielsweise als Wellrohrkompensator, als Linsenkompensator oder beispielsweise auch als Axialkompensator ausgebildet sein.

Der Metallkompensator 110 weist nach einer weiteren Ausgestaltung der Erfindung wenigstens eine, beispielsweise entlang einer kreisförmigen und/oder in sich geschlossenen Umfangslinie, umlaufende Vertiefung auf, die beispielsweise als eine - zum Lumen des Anschlußstutzens hin vertiefte oder, wie auch in Fig. 1 angedeutet, als eine bezüglich des Lumens des Anschlußstutzens hervortretende - Sicke ausgebildet sein kann. Der Metallkompensator kann zudem als integraler Bestandteil des Anschlußstutzens 100 ausgebildet sein, beispielsweise derart, daß die vorbezeichnete wenigstens eine Vertiefung unmittelbar innerhalb der Wandung des Ansuchlußstutzens 100 gebildet, beispielsweise nämlich darin eingerollt bzw. eingeprägt ist.

Alternativ oder in Ergänzung kann der Metallkompensator 110 abschnittsweise als Metallbalg, nämlich als ringförmiger Zylinder aus Metall mit in Richtung der Längsachse wellenförmig variierendem Innen-Durchmesser und gleichermaßen wellenförmig variierende Außen-Durchmesser ausgebildet sein, beispielsweise derart, daß die Wandung des Anschlußstutzens 110 zwei oder mehr in Strömungsrichtung hintereinander angeordnete, insb. gleichgeformte, Vertiefungen aufweist und/oder indem die Wandung des Anschlußstutzens 100 zumindest abschnittsweise gewellt ist bzw. indem der Anschlußstutzen 100 in Richtung der Längsachse wellenförmig variierende Innen-Durchmesser und gleichermaßen wellenförmig variierende Außen-Durchmesser aufweist.

Zur weiteren Verbesserung des mittels des Metallkompensator 110 bereits erzielbaren Ausgleichs des vorbezeichneten Versatzes zwischen den an den Meßwandler anzuschließenden Rohrleitungssegmenten kann darüberhinaus, wie auch in Fig. 2 schematisch dargestellt, auch der Anschlußstutzen 400 in einem zwischen dessen ersten Stutzenenden 400+ und dessen das zweite Gehäuse-Ende 1000# bildenden zweiten Stutzenenden 400# verorteten Bereich einen, beispielsweise auch zum Metallkompensator 110 baugleichen, Metallkompensator 410 aufweisen.

Alternativ dazu kann der zweite Anschlußstutzen aber auch keinen Metallkompensator aufweisen, beispielsweise um einen durch den Meßwandler insgesamt im strömenden Meßstoff provozierten Druckverlust möglichst niedrig zu halten. Für diesen Fall, kann es zudem auch von Vorteil sein, das Meßgerät so in die Rohrleitung einzugliedern bzw. zu verwenden, daß der Anschlußstutzen 100 hinsichtlich einer Strömungsrichtung des durch den Meßwandler strömen gelassenen Meßstoffs einlaßseitig angeordnet ist.

## Patentansprüche

1. Meßgerät zum Messen wenigstens einer Meßgröße eines, insb. in einer Rohrleitung geführten, fluiden Meßstoffs, welches Meßgerät umfaßt:
- einen dem Generieren wenigstens eines mit der wenigstens einen Meßgröße korrespondierenden Meßsignals (s1, s2) dienlichen, insb. vibronischen oder magnetisch-induktiven oder akustischen, Meßwandler;
- sowie eine an den Meßwandler elektrisch angeschlossene, dem Verarbeiten des wenigstens einen Meßsignals (s1, s2) dienliche Meßgerät-Elektronik;
- wobei der Meßwandler
-- ein (Wandler-)Schutzgehäuse (1000),
-- einen, insb. als Leitungsverzweigung ausgebildeten und/oder bezüglich einer (gedachten) Längsachse rotationssymmetrischen, ersten Anschlußstutzen (100) mit einem von einer Wandung aus einem Metall umhüllten, sich von einer in einem, insb. von einem Anschlußflansch gefaßten, ersten Stutzenende (100+) des ersten Anschlußstutzens (100) verorteten ersten Strömungsöffnung bis zu einer in einem zweiten Stutzenende (100#) nämlichen ersten Anschlußstutzens (100) verorteten zweiten Strömungsöffnung erstreckenden, insb. bezüglich einer (gedachten) Längsachse des ersten Anschlußstutzens rotationssymmetrischen, Lumen,
-- einen, insb. zum ersten Anschlußstutzen baugleichen und/oder als Leitungsvereinigung dienlichen und/oder bezüglich einer (gedachten) Längsachse rotationssymmetrischen, zweiten Anschlußstutzen (400) mit einem von einer Wandung, insb. aus einem Metall, umhüllten, sich von einer in einem, insb. von einem Anschlußflansch gefaßten, ersten Stutzenende (400+) des zweiten Anschlußstutzens (400) verorteten ersten Strömungsöffnung bis zu einer in einem zweiten Stutzenende (400#) nämlichen zweiten Anschlußstutzens (400) verorteten zweiten Strömungsöffnung erstreckenden, insb. bezüglich einer (gedachten) Längsachse des zweiten Anschlußstutzens rotationssymmetrischen, Lumen,
-- sowie eine, insb. als starres und/oder zumindest abschnittsweise kreiszylindrisches Rohr ausgebildete, erste Fluidleitung (200) mit einem von einer Wandung, insb. aus einem Metall, umhüllten, sich von einer in einem ersten Leitungsende (200+) der ersten Fluidleitung verorteten ersten Strömungsöffnung bis zu einer in einem zweiten Leitungsende (200#) nämlicher ersten Fluidleitung (200) verorteten zweiten Strömungsöffnung erstreckenden Lumen, aufweist;
- wobei die erste Fluidleitung (200) sowohl mit deren ersten Leitungsende (200+) mit dem zweiten Leitungsende (100#) des ersten Anschlußstutzens (100) als auch mit deren zweiten Leitungsende (200#) mit dem zweiten Leitungsende (400#) des zweiten Anschlußstutzens (400), insb. jeweils stoffschlüssig, verbunden ist, insb. derart, daß das Lumen der ersten Fluidleitung (200) unter Bildung eines sich vom ersten Anschlußstutzen bis zum zweiten Anschlußstutzen erstreckende Fluidkanals mit sowohl dem Lumen des ersten Anschlußstutzens (100) als auch dem Lumen des zweiten Anschlußstutzens (400) kommuniziert und/oder derart, daß die erste Strömungsöffnung der ersten Fluidleitung (200) in die zweite Strömungsöffnung des ersten Anschlußstutzens (100) und die zweite Strömungsöffnung der ersten Fluidleitung (200) in die zweite Strömungsöffnung des zweiten Anschlußstutzens (400) münden;
- wobei das (Wandler-)Schutzgehäuse (1000) eine von einer Wandung, insb. aus einem Metall, umhüllte Kavität aufweist, innerhalb der die erste Fluidleitung (200) plaziert ist;
- und wobei ein erstes Gehäuse-Ende (1000+) des Schutzgehäuses (1000) mittels des ersten Anschlußstutzens (100) und ein zweites Gehäuse-Ende (1000#) des (Wandler-)Schutzgehäuses (1000) mittels des zweiten Anschlußstutzens (400) gebildet ist, derart, daß das Schutzgehäuse (1000) eine zumindest anteilig die Kavität seitlich begrenzende Seitenwand aufweist, die sowohl am zweiten Leitungsende (100#) des ersten Anschlußstutzens (100) als auch am zweiten Leitungsende (400#) des zweiten Anschlußstutzens (400) fixiert bzw. damit jeweils stoffschlüssig verbunden ist;
- **dadurch gekennzeichnet, daß** zumindest der erste Anschlußstutzen (100) in einem zwischen dessen ersten Stutzenenden (100+) und dessen das erste Gehäuse-Ende (1000+) bildenden zweiten Stutzenenden (100#) verorteten, insb. nämlich von dessen erstem Stutzenende und/oder vom ersten Gehäuse-Ende entfernten, Bereich einen, insb. integrierten und/oder als Axialkompensator ausgebildeten, Metallkompensator (110) aufweist.

2. Meßgerät nach einem der vorherigen Ansprüche,
- wobei der erste Anschlußstutzen eingerichtet ist, auf eine in Richtung einer Längsachse des ersten Anschlußstutzens wirkende (Zug-)Kraft im Bereich des Metallkompensators mit einer (Längs-)Dehnung zu reagieren, die größer ist als eine (Längs-)Dehnung mit der der Anschlußstutzen im Bereich des ersten Stutzenende (100+) und/oder im Bereich des zweiten Stutzenendes (100#) auf nämliche (Zug-)Kraft reagiert; und/oder
- wobei der erste Anschlußstutzen eingerichtet ist, auf eine eine, insb. gerade, (Querkraft-)Biegung des ersten Anschlußstutzens bewirkende, quer zur Längsachse wirkende (Quer-)Kraft im Bereich des Metallkompensators mit einer Krümmung zu reagieren, die größer ist als eine Krümmung mit der der erste Anschlußstutzen im Bereich des ersten Stutzenendes (100+) und/oder im Bereich des zweiten Stutzenendes (100#) auf nämliche (Quer-)Kraft reagiert.

3. Meßgerät nach einem der vorherigen Ansprüche, wobei der Metallkompensator wenigstens eine, insb. entlang einer kreisförmigen und/oder in sich geschlossenen Umfangslinie, umlaufende, insb. als Sicke ausgebildete und/oder in sich geschlossene, Vertiefung aufweist.

4. Meßgerät nach einem der vorherigen Ansprüche, wobei der Metallkompensator durch wenigstens eine, insb. entlang einer kreisförmigen und/oder in sich geschlossenen Umfangslinie, umlaufende, insb. als Sicke ausgebildete und/oder in sich geschlossene, Vertiefung in der Wandung des ersten Ansuchlußstutzens gebildet ist.

5. Meßgerät nach einem der vorherigen Ansprüche, wobei der Metallkompensator integraler Bestandteil des ersten Anschlußstutzens, insb. indem die Wandung des ersten Anschlußstutzens wenigstens eine, insb. entlang einer kreisförmigen und/oder in sich geschlossenen Umfangslinie, umlaufende, insb. als Sicke ausgebildete und/oder in sich geschlossene, Vertiefung aufweist.

6. Meßgerät nach einem der vorherigen Ansprüche, wobei die Wandung des ersten Anschlußstutzens zum Bilden des Metallkompensators wenigstens eine, insb. entlang einer kreisförmigen und/oder in sich geschlossenen Umfangslinie, umlaufende, insb. als Sicke ausgebildete und/oder in sich geschlossene, Vertiefung aufweist und/oder abschnittsweise als Metallbalg ausgebildet ist, insb. indem die Wandung des ersten Anschlußstutzens zumindest abschnittsweise gewellt ist und/oder indem der erste Anschlußstutzen in Richtung der Längsachse wellenförmig variierende Innen-Durchmesser und gleichermaßen wellenförmig variierende Außen-Durchmesser aufweist.

7. Meßgerät nach dem vorherigen Anspruch, wobei die Wandung des ersten Anschlußstutzens zwei oder mehr in Strömungsrichtung hintereinander angeordnete, insb. gleichgeformte, Vertiefungen aufweist.

8. Meßgerät nach einem der vorherigen Ansprüche, wobei der Metallkompensator des ersten Anschlußstutzens als Wellrohrkompensator ausgebildet ist.

9. Meßgerät nach einem der vorherigen Ansprüche, wobei der Metallkompensator des ersten Anschlußstutzens als Linsenkompensator ausgebildet ist.

10. Meßgerät nach einem der vorherigen Ansprüche, wobei der Metallkompensator des ersten Anschlußstutzens als Axialkompensator ausgebildet ist.

11. Meßgerät nach einem der vorherigen Ansprüche, wobei der zweite Anschlußstutzen in einem zwischen dessen ersten Stutzenenden und dessen das erste Gehäuse-Ende bildenden zweiten Stutzenenden verorteten, insb. nämlich von dessen erstem Stutzenende und/oder vom ersten Gehäuse-Ende entfernten, Bereich einen, insb. integrierten und/oder als Axialkompensator ausgebildeten, Metallkompensator (410) aufweist, insb. derart, daß der Metallkompensator integraler Bestandteil des ersten Anschlußstutzens und/oder baugleich zum Metallkompensator (110) des ersten Anschlußstutzens (100) ist.

12. Meßgerät nach einem der Ansprüche 1 bis 10, wobei der zweite Anschlußstutzen keinen Metallkompensator aufweist.

13. Meßgerät nach einem der vorherigen Ansprüche,
- wobei der Meßwandler eingerichtet ist, in ein Rohrleitungssystem eingegliedert zu werden, insb. derart, daß das zweite Stutzenende des ersten Anschlußstutzens mit einem dem Meßwandler zugewandten Rohrende eines ersten Rohrleitungssegments des Rohrleitungssystems und/oder daß das zweitem Stutzenende des zweiten Anschlußstutzen mit einem dem Meßwandler zugewandten Rohrende eines zweiten Rohrleitungssegments des Rohrleitungssystems fluidisch, insb. unter Bildung eines sich vom ersten Rohrleitungssegment bis zum zweiten Rohrleitungssegment erstreckende Fluidkanals und/oder Leckage frei, verbunden ist; und/oder
- wobei die ersten und zweiten Anschlußstutzen (100, 400) miteinander fluchten, insb. derart, daß eine Verlängerung einer Längsachse des ersten Anschlußstutzens zu einer Verlängerung einer Längsachse des zweiten Anschlußstutzens parallel ist oder damit koinzidiert.

14. Meßgerät nach einem der vorherigen Ansprüche,
- wobei die erste Fluidleitung (200) dafür eingerichtet ist, vom Meßstoff durchströmt und währenddessen vibrieren gelassen zu werden; und/oder
- wobei die Meßgerät-Elektronik dafür eingerichtet ist, ein elektrische Treibersignal in den Meßwandler einzuspeisen; und/oder
- wobei die erste Fluidleitung (200) zumindest abschnittsweise, insb. V-förmig und/oder U-förmig und/oder kreisbogenförmig, gekrümmt ist; und/oder
- wobei die erste Fluidleitung (200) zumindest abschnittsweise gerade, insb. nämlich hohlzylindrisch, ist.

15. Meßgerät nach einem der vorherigen Ansprüche, weiters umfassend:
- wenigstens eine, insb. als starres und/oder zumindest abschnittsweise kreiszylindrisches Rohr ausgebildete und/oder zur ersten Fluidleitung baugleiche, zweite Fluidleitung (300) mit einem von einer Wandung, insb. aus einem Metall, umhüllten, sich von einer in einem ersten Leitungsende (300+) der zweiten Fluidleitung verorteten ersten Strömungsöffnung bis zu einer in einem zweiten Leitungsende (300#) nämlicher zweiten Fluidleitung (300) verorteten zweiten Strömungsöffnung erstreckenden Lumen,
- wobei die zweite Fluidleitung (300) mit deren ersten Leitungsende mit dem zweiten Leitungsende (100#) des ersten Anschlußstutzens (100) und mit deren zweiten Leitungsende mit dem zweiten Leitungsende (400#) des zweiten Anschlußstutzens (400) verbunden ist, insb. derart, daß sowohl das Lumen der ersten Fluidleitung (200) als auch das Lumen der zweiten Fluidleitung (300) sowohl mit dem Lumen des ersten Anschlußstutzens (100) als auch mit dem Lumen des zweiten Anschlußstutzens (400) kommunizieren und/oder derart, daß die erste Strömungsöffnung der zweiten Fluidleitung (300) in eine ebenfalls im zweiten Stutzenende des ersten Anschlußstutzens verortete dritte Strömungsöffnung des ersten Anschlußstutzens (100) und die zweite Strömungsöffnung der zweiten Fluidleitung (300) in eine ebenfalls im zweiten Stutzenende des zweiten Anschlußstutzens verortete dritte Strömungsöffnung des zweiten Anschlußstutzens (400) münden.

16. Meßgerät nach einem der vorherigen Ansprüche,
- weiters umfassend: wenigstens einen, insb. elektromechanischen bzw. elektrodynamischen, Schwingungserreger (41) zum Anregen bzw. Aufrechterhalten mechanischer Schwingungen, insb. Biegeschwingungen, zumindest der ersten Fluidleitung (200), insb. zum Anregen bzw. Aufrechterhalten mechanischer Schwingungen sowohl der ersten Fluidleitung (200) als auch der zweiten Fluidleitung (300); und/oder
- weiters umfassend: wenigstens einen, insb. zumindest an der ersten Fluidleitung angebrachten und/oder zumindest in deren Nähe plazierten, ersten Sensor (51) zum Erzeugen wenigstens eines mit einer Meßgröße eines im Fluidleitungssystem geführten Fluids korrespondierenden, nämlich wenigsten eines von nämlicher Meßgröße abhängigen Signalparameter, insb. einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden - insb. elektrischen - ersten Meßsignals (s1).

17. Verwenden eines Meßgeräts gemäß einem der vorherigen Ansprüche zum Ermitteln von Meßwerten für wenigstens eine Meßgröße - insb. nämlich einer Massendurchflußrate, eines Massendurchflusses, einer Volumendurchflußrate, eines Volumendurchflusses, einer Dichte, einer Viskosität oder einer Temperatur - eines in einer Rohrleitung geführten fluiden Meßstoffs, insb. eines Gases, einer Flüssigkeit oder einer Dispersion, insb. derart, daß der erste Anschlußstutzen hinsichtlich einer Strömungsrichtung des durch den Meßwandler strömen gelassenen Meßstoffs einlaßseitig angeordnet ist und/oder daß der Meßstoff in einer vorgegebenen Strömungsrichtung durch die Rohrleitung sowie den in nämliche Rohrleitung eingegliederten Meßwandler strömen gelassen wird.

## Claims

1. A measuring device for measuring at least one measured variable of a fluid measured substance, in particular conducted in a pipeline, said measuring device comprising:
- An, in particular vibronic or magneto-inductive or acoustic, measuring transducer used to generate at least one measurement signal (s1, s2) corresponding to the at least one measured variable;
- and measuring device electronics electrically connected to the measuring transducer used to process the at least one measurement signal (s1, s2);
- wherein the measuring transducer has
• a (transducer) protective housing (1000),
• a first connecting piece (100), in particular configured as a line branch and/or rotationally symmetrical to an (imaginary) longitudinal axis, with a lumen enclosed by a wall made from a metal, extending from a first flow opening located in a first connecting piece end (100+) of the first connecting piece (100), in particular mounted by a connection flange) to a second flow opening located in a second connecting piece end (100#) of said first connecting piece (100), in particular rotationally symmetrical to an (imaginary) longitudinal axis of the first connecting piece,
• a second connecting piece (400), in particular with an identical design to the first connecting piece and/or used as a line branch, and/or rotationally symmetrical to an (imaginary) longitudinal axis, with a lumen enclosed by a wall, in particular made from a metal, extending from a first flow opening located in a first connecting piece end (400+) of the second connecting piece (400), in particular mounted by a connection flange, to a second flow opening located in a second connecting piece end (400#) of said second connecting piece (400), in particular rotationally symmetrical to an (imaginary) longitudinal axis of the second connecting piece,
• and a first fluid line (200), in particular configured as a pipe that is rigid and/or exhibits a circular cylindrical form at least in sections, with a lumen enclosed by a wall, in particular made from a metal, extending from a first flow opening located in a first line end (200+) of the first fluid line to a second flow opening located in a second line end (200#) of said first fluid line (200);
- wherein the first fluid line (200) is connected by its first line end (200+) to the second line end (100#) of the first connecting piece (100) and by its second line end (200#) to the second line end (400#) of the second connecting piece (400), in particular by means of a permanent material bond in each case, in particular in such a way that the lumen of the first fluid line (200) communicates with both the lumen of the first connecting piece (100) and the lumen of the second connecting piece (400), forming a fluid channel extending from the first connecting piece to the second connecting piece, and/or in such a way that the first flow opening of the first fluid line (200) leads into the second flow opening of the first connecting piece (100) and the second flow opening of the first fluid line (200) leads into the second flow opening of the second connecting piece (400);
- wherein the transducer protective housing (1000) has a cavity surrounded by a wall, in particular made from a metal, within which the first fluid line (200) is positioned;
- and wherein a first housing end (1000+) of the protective housing (1000) is formed using the first connecting piece (100) and a second housing end (1000#) of the (transducer) protective housing (1000) is formed using the second connecting piece (400) in such a way that the protective housing (1000) has a side wall which abuts the side of the cavity at least in part, which is secured both to the second line end (100#) of the first connecting piece (100) and the second line end (400#) of the second connecting piece (400) and has a permanent material bond to each;
- **characterized in that** at least the first connecting piece (100) has a metal compensator (110), in particular integrated and/or configured as an axial compensator, located in an area between its first connecting piece end (100+) and its second connecting piece end (100#) forming the first housing end (1000+), that is to say, in particular, at a distance from its first connecting piece end and/or the first housing end.

2. The measuring device as claimed in one of the preceding claims,
- wherein the first connecting piece is configured to respond to a (tensile) force acting in the direction of a longitudinal axis of the first connecting piece in the area of the metal compensator with a (longitudinal) expansion, which is greater than a (longitudinal) expansion with which the connecting piece) responds to said (tensile) force in the area of the first connecting piece end (100+) and/or in the area of the second connecting piece end (100#); and/or
- wherein the first connecting piece is configured to respond a (lateral) force causing an, in particular ordinary, (lateral force) oscillation of the first connecting piece, acting transverse to the longitudinal axis in the area of the metal compensator with a curvature, which is greater than a curvature with which the first connecting piece responds to said (lateral) force in the area of the first connecting piece end (100+) and/or in the area of the second connecting piece end (100#).

3. The measuring device as claimed in one of the preceding claims, wherein the metal compensator has least at least one recess, in particular extending along a circular and/or enclosed perimeter, in particular with a beaded and/or enclosed design.

4. The measuring device as claimed in one of the preceding claims, wherein the metal compensator is formed by at least one recess in the wall of the first connecting piece, in particular extending along a circular and/or enclosed perimeter, in particular with a beaded and/or enclosed design.

5. The measuring device as claimed in one of the preceding claims, wherein the metal compensator is an integral component of the first connecting piece, in particular because the wall of the first connecting piece has at least one recess, in particular extending along a circular and/or enclosed perimeter, in particular with a beaded and/or enclosed design.

6. The measuring device as claimed in one of the preceding claims, wherein the wall of the first connecting piece for forming the metal compensator has at least one recess, in particular extending along a circular and/or enclosed perimeter, in particular with a beaded and/or enclosed design, and/or takes the form of metal bellows at least in sections, in particular since the wall of the first connecting piece is corrugated at least in sections and/or since the first connecting piece has internal diameters which vary in a wave shape toward the longitudinal axis and external diameters which likewise vary in a wave shape.

7. The measuring device as claimed in the preceding claim, wherein the wall of the first connecting piece has two or more recesses arranged one after another in the flow direction, in particular with the same shape.

8. The measuring device as claimed in one of the preceding claims, wherein the metal compensator of the first connecting piece is configured as a bellows compensator.

9. The measuring device as claimed in one of the preceding claims, wherein the metal compensator of the first connecting piece is configured as a lens compensator.

10. The measuring device as claimed in one of the preceding claims, wherein the metal compensator of the first connecting piece is configured as an axial compensator.

11. The measuring device as claimed in one of the preceding claims, wherein the second connecting piece has a metal compensator (410), in particular integrated and/or configured as an axial compensator, located in an area located between its first connecting piece end and its second connecting piece end forming the first housing end, that is to say, in particular, at a distance from its first connecting piece end and/or from the first housing end, in particular in such a way that the metal compensator is an integral component of the first connecting piece and/or is identical in design to the metal compensator (110) of the first connecting piece (100).

12. The measuring device as claimed in one of claims 1 to 10, wherein the second connecting piece does not have a metal compensator.

13. The measuring device as claimed in one of the preceding claims,
- wherein the measuring transducer is configured to be incorporated into a pipeline system, in particular in such a way that the second connecting piece end of the first connecting piece is fluidically connected to a pipe end of a first pipeline segment of the pipeline system facing toward the measuring transducer and/or in such a way that the second connecting piece end of the second connecting piece is fluidically connected to a pipe end of a second pipeline segment of the pipeline system facing toward the measuring transducer, in particular forming a fluid channel extending from the first pipeline segment to the second pipeline segment and/or without leaks; and/or
- wherein the first and second connecting pieces (100, 400) are aligned with each other, in particular in such a way that an extension of a longitudinal axis of the first connecting piece is parallel with an extension of a longitudinal axis of the second connecting piece or coincides with it.

14. The measuring device as claimed in one of the preceding claims,
- wherein the first fluid line (200) is configured to have the measured substance flow through it, causing it to vibrate in the process; and/or
- wherein the measuring device electronics are configured to supply the measuring transducer with an electrical driver signal; and/or
- wherein the first fluid line (200) is curved at least in sections, in particular in the shape of a V and/or U, and/or arc; and/or
- wherein the first fluid line (200) is straight at least in sections, that is to say, in particular, is a hollow cylinder.

15. The measuring device as claimed in one of the preceding claims, further comprising:
- - at least one second fluid line (300), in particular configured as a pipe that is rigid and/or exhibits a circular cylindrical form at least in sections and/or with an identical design to the first fluid line, with a lumen enclosed by a wall, in particular made from a metal, extending from a first flow opening located in a first line end (300+) of the second fluid line to a second flow opening located in a second line end (300#) of said second fluid line (300),
- - wherein the second fluid line (300) is connected by its first line end to the second line end (100#) of the first connecting piece (100) and by its second line end to the second line end (400#) of the second connecting piece (400), in particular in such a way that both the lumen of the first fluid line (200) and the lumen of the second fluid line (300) communicate with both the lumen of the first connecting piece (100) and the lumen of the second connecting piece (400) and/or in such a way that the first flow opening of the second fluid line (300) leads to a third flow opening of the first connecting piece (100) also located in the second connecting piece end of the first connecting piece and the second flow opening of the second fluid line (300) leads to a third flow opening of the second connecting piece (400) which is also located in the second connecting piece end of the second connecting piece.

16. The measuring device as claimed in one of the preceding claims,
- further comprising: At least one, in particular electromechanical or electrodynamic, oscillation exciter (41) for initiating and/or maintaining mechanical oscillations, in particular bending oscillations, at least of the first fluid line (200), in particular for initiating and/or maintaining mechanical oscillations both of the first fluid line (200) and the second fluid line (300); and/or
- further comprising: At least one first sensor (51), in particular attached at least to the first fluid line and/or at least positioned in its vicinity, for generating at least one - in particular electrical - first measurement signal (s1) with a signal parameter corresponding to a measured variable of a fluid conducted in the fluid line system, that is to say at least one signal parameter dependent on said measured variable, in particular a signal level dependent on said measured variable and/or a signal frequency dependent on said measured variable, and/or a phase angle dependent on said measured variable.

17. The use of a measuring device as claimed in one of the preceding claims for determining measured values for at least one measured variable - that is to say, in particular, a mass flow rate, a mass flow, a volumetric flow rate, a volume flow, a density, a viscosity or a temperature - of a fluid measured substance conducted in a pipeline, in particular a gas, a liquid or a dispersion, in particular in such a way that the first connecting piece is arranged on the inlet side relative to a flow direction of the measured substance conducted through the measuring transducer and/or in such a way that the measured substance is conducted in a specified flow direction through the pipeline and the measuring transducer incorporated into said pipeline.

## Revendications

1. Appareil de mesure destiné à la mesure d'au moins une grandeur de mesure d'un produit fluide, notamment guidé dans une conduite, lequel appareil de mesure comprend :
- un transducteur, notamment de type vibronique ou électromagnétique ou acoustique, lequel transducteur sert à générer au moins un signal de mesure (s1, s2) correspondant à l'au moins une grandeur de mesure ;
- ainsi qu'une électronique d'appareil de mesure raccordée électriquement au transducteur et servant au traitement de l'au moins un signal de mesure (s1, s2) ;
- le transducteur présentant
-- un boîtier de protection (de transducteur) (1000),
-- une première tubulure de raccordement (100), réalisée notamment sous la forme d'une dérivation de conduite et/ou à symétrie de rotation par rapport à un axe longitudinal (imaginaire), laquelle tubulure comprend un canal intérieur, notamment à symétrie de rotation par rapport à un axe longitudinal (imaginaire) de la première tubulure de raccordement, lequel canal est enveloppé par une paroi en métal et lequel canal s'étend d'une première ouverture d'écoulement située dans une première extrémité de tubulure (100+), notamment entourée d'une bride de raccordement, de la première tubulure de raccordement (100) jusqu'à une deuxième ouverture d'écoulement située dans une deuxième extrémité de tubulure (100#) de la même première tubulure de raccordement (100),
-- une deuxième tubulure de raccordement (400), notamment de construction identique à la première tubulure de raccordement et/ou servant de jonction de conduite et/ou présentant une symétrie de rotation par rapport à un axe longitudinal (imaginaire), laquelle deuxième tubulure comprend un canal intérieur enveloppé par une paroi, notamment en métal, lequel canal s'étend d'une première ouverture d'écoulement située dans une première extrémité de tubulure (400+), notamment entourée d'une bride de raccordement, de la deuxième tubulure de raccordement (400) jusqu'à une deuxième ouverture d'écoulement située dans une deuxième extrémité de tubulure (400#) de la même deuxième tubulure de raccordement (400),
-- ainsi qu'une première conduite de fluide (200), réalisée notamment sous la forme d'un tube rigide et/ou au moins partiellement cylindrique circulaire, laquelle conduite comprend un canal intérieur enveloppé par une paroi, notamment en un métal, lequel canal s'étend d'une première ouverture d'écoulement située dans une première extrémité de conduite (200+) de la première conduite de fluide jusqu'à une deuxième ouverture d'écoulement située dans une deuxième extrémité de conduite (200#) de ladite première conduite de fluide (200) ;
- la première conduite de fluide (200) étant reliée aussi bien par sa première extrémité de conduite (200+) à la deuxième extrémité de conduite (100#) de la première tubulure de raccordement (100) que par sa deuxième extrémité de conduite (200#) à la deuxième extrémité de conduite (400#) de la deuxième tubulure de raccordement (400), notamment respectivement par liaison de matière, notamment de telle manière, que le canal intérieur de la première conduite de fluide (200) communique avec le canal intérieur de la première tubulure de raccordement (100) ainsi qu'avec le canal intérieur de la deuxième tubulure de raccordement (400) en formant un canal de fluide s'étendant de la première tubulure de raccordement à la deuxième tubulure de raccordement et/ou de telle sorte que la première ouverture d'écoulement de la première conduite de fluide (200) débouche dans la deuxième ouverture d'écoulement de la première tubulure de raccordement (100) et la deuxième ouverture d'écoulement de la première conduite de fluide (200) débouche dans la deuxième ouverture d'écoulement de la deuxième tubulure de raccordement (400) ;
- le boîtier de protection (de transducteur) (1000) présentant une cavité enveloppée par une paroi, notamment en un métal, cavité à l'intérieur de laquelle est placée la première conduite de fluide (200) ;
- et une première extrémité de boîtier (1000+) du boîtier de protection (1000) étant formée au moyen de la première tubulure de raccordement (100) et une deuxième extrémité de boîtier (1000#) du boîtier de protection (de transducteur) (1000) étant formée au moyen de la deuxième tubulure de raccordement (400), de telle manière que le boîtier de protection (1000) présente une paroi latérale délimitant latéralement au moins partiellement la cavité, laquelle paroi est fixée ou reliée à la fois à la deuxième extrémité de conduite (100#) de la première tubulure de raccordement (100) et à la deuxième extrémité de conduite (400#) de la deuxième tubulure de raccordement (400) ou laquelle paroi est respectivement reliée à celles-ci par une liaison de matière ;
- **caractérisé en ce qu'**au moins la première tubulure de raccordement (100) présente - dans une zone située entre ses premières extrémités de tubulure (100+) et ses deuxièmes extrémités de tubulure (100#) formant la première extrémité de boîtier (1000+), notamment à savoir éloignée de sa première extrémité de tubulure et/ou de la première extrémité de boîtier - un compensateur métallique (110), notamment intégré et/ou conçu comme un compensateur axial.

2. Appareil de mesure selon la revendication précédente,
- pour lequel la première tubulure de raccordement est conçue pour réagir à une force (de traction) agissant dans la direction d'un axe longitudinal de la première tubulure de raccordement dans la zone du compensateur métallique avec un allongement (longitudinal) qui est supérieur à un allongement (longitudinal) avec lequel la tubulure de raccordement réagit dans la zone de la première extrémité de tubulure (100+) et/ou dans la zone de la deuxième extrémité de tubulure (100#) à la même force (de traction) ; et/ou
- pour lequel la première tubulure de raccordement est conçue pour réagir - dans la zone du compensateur métallique, à une force (transversale) agissant transversalement à l'axe longitudinal et provoquant une flexion (par une force transversale), notamment droite, de la première tubulure de raccordement - avec une courbure qui est supérieure à une courbure avec laquelle la première tubulure de raccordement réagit, dans la zone de la première extrémité de tubulure (100+) et/ou dans la zone de la deuxième extrémité de tubulure (100#) à la même force (transversale).

3. Appareil de mesure selon l'une des revendications précédentes, pour lequel le compensateur métallique présente au moins un renfoncement périphérique, notamment réalisé sous forme de moulure et/ou fermé sur lui-même, notamment le long d'une ligne périphérique circulaire et/ou fermé sur lui-même.

4. Appareil de mesure selon l'une des revendications précédentes, pour lequel le compensateur métallique est formé par au moins un renfoncement périphérique, notamment réalisé sous forme de moulure et/ou fermé sur lui-même, notamment le long d'une ligne périphérique circulaire et/ou fermée sur lui-même, dans la paroi de la première tubulure de raccordement.

5. Appareil de mesure selon l'une des revendications précédentes, pour lequel le compensateur métallique fait partie intégrante de la première tubulure de raccordement, notamment en ce que la paroi de la première tubulure de raccordement présente au moins un renfoncement périphérique, notamment réalisé sous forme de moulure et/ou fermé sur lui-même, notamment le long d'une ligne périphérique circulaire et/ou fermée sur lui.

6. Appareil de mesure selon l'une des revendications précédentes,
pour lequel la paroi de la première tubulure de raccordement présente, pour former le compensateur métallique, au moins un renfoncement périphérique, notamment réalisé sous forme de moulure et/ou fermé sur lui-même, notamment le long d'une ligne périphérique circulaire et/ou fermé sur lui-même, et/ou pour lequel la paroi de la première tubulure de raccordement est réalisée par sections sous forme d'un soufflet métallique, notamment en ce que la paroi de la première tubulure de raccordement est ondulée au moins par sections et/ou en ce que la première tubulure de raccordement présente des diamètres intérieurs variant de manière ondulée dans la direction de l'axe longitudinal et des diamètres extérieurs variant de manière ondulée de la même manière.

7. Appareil de mesure selon la revendication précédente, pour lequel la paroi de la première tubulure de raccordement présente deux ou plusieurs renfoncements disposés les uns derrière les autres dans le sens de l'écoulement, lesquels renfoncements sont notamment de même forme.

8. Appareil de mesure selon l'une des revendications précédentes, pour lequel le compensateur métallique de la première tubulure de raccordement est conçu comme un compensateur à tube ondulé.

9. Appareil de mesure selon l'une des revendications précédentes, pour lequel le compensateur métallique de la première tubulure de raccordement est conçu comme un compensateur lentiforme.

10. Appareil de mesure selon l'une des revendications précédentes, pour lequel le compensateur métallique de la première tubulure de raccordement est conçu comme un compensateur axial.

11. Appareil de mesure selon l'une des revendications précédentes, pour lequel la deuxième tubulure de raccordement présente, dans une zone située entre ses premières extrémités de tubulure et ses deuxièmes extrémités de tubulure formant la première extrémité de boîtier, notamment à savoir éloignée de sa première extrémité de tubulure et/ou de la première extrémité de boîtier, un compensateur métallique (410), notamment intégré et/ou conçu comme compensateur axial, notamment de telle sorte que le compensateur métallique fait partie intégrante de la première tubulure de raccordement et/ou est de construction identique au compensateur métallique (110) de la première tubulure de raccordement (100).

12. Appareil de mesure selon l'une des revendications 1 à 10, pour lequel la deuxième tubulure de raccordement ne comporte pas de compensateur métallique.

13. Appareil de mesure selon l'une des revendications précédentes,
- pour lequel le transducteur est conçu pour être intégré dans un système de conduite, notamment de telle sorte que la deuxième extrémité de la première tubulure de raccordement soit reliée fluidiquement à une extrémité, tournée vers le transducteur, d'un premier segment de conduite du système de conduite et/ou que la deuxième extrémité de la deuxième tubulure de raccordement soit reliée fluidiquement à une extrémité, tournée vers le transducteur, d'un deuxième segment de conduite du système de conduite, notamment en formant un canal de fluide s'étendant du premier segment de conduite au deuxième segment de conduite et/ou exempt de fuites ; et/ou
- la première et la deuxième tubulure de raccordement (100, 400) étant alignées l'une avec l'autre, notamment de telle sorte qu'un prolongement d'un axe longitudinal de la première tubulure de raccordement est parallèle à un prolongement d'un axe longitudinal de la deuxième tubulure de raccordement ou coïncide avec celui-ci.

14. Appareil de mesure selon l'une des revendications précédentes,
- pour lequel la première conduite de fluide (200) est conçue pour être traversée par le produit et pour être mise en vibrations pendant ce temps ; et/ou
- pour lequel l'électronique d'appareil de mesure est conçue pour alimenter un signal d'attaque électrique dans le transducteur ; et/ou
- pour lequel la première conduite de fluide (200) est courbée au moins par sections, notamment en forme de V et/ou en forme de U et/ou en forme d'arc de cercle ; et/ou
- pour lequel la première conduite de fluide (200) est droite au moins par sections, notamment cylindrique creuse.

15. Appareil de mesure selon l'une des revendications précédentes, comprenant en outre :
- au moins une deuxième conduite de fluide (300), réalisée notamment sous forme de tube rigide et/ou cylindrique circulaire au moins par sections et/ou de construction identique à la première conduite de fluide, avec un canal intérieur enveloppé par une paroi, notamment en un métal, lequel canal s'étend d'une première ouverture d'écoulement située dans une première extrémité de conduite (300+) de la deuxième conduite de fluide jusqu'à une deuxième ouverture d'écoulement située dans une deuxième extrémité de conduite (300#) de ladite deuxième conduite de fluide (300),
- la deuxième conduite de fluide (300) étant reliée par sa première extrémité de conduite à la deuxième extrémité de conduite (100#) de la première tubulure de raccordement (100) et par sa deuxième extrémité de conduite à la deuxième extrémité de conduite (400#) de la deuxième tubulure de raccordement (400), notamment de telle manière qu'aussi bien le canal intérieur de la première conduite de fluide (200) que le canal intérieur de la deuxième conduite de fluide (300) communiquent aussi bien avec le canal intérieur de la première tubulure de raccordement (100) qu'avec le canal intérieur de la deuxième tubulure de raccordement (400) et/ou de telle manière que la première ouverture d'écoulement de la deuxième conduite de fluide (300) débouche dans une troisième ouverture d'écoulement de la première tubulure de raccordement (100), laquelle troisième ouverture est également située dans la deuxième extrémité de la première tubulure de raccordement, et que la deuxième ouverture d'écoulement de la deuxième conduite de fluide (300) débouche dans une troisième ouverture d'écoulement de la deuxième tubulure de raccordement (400), laquelle troisième ouverture est également située dans la deuxième extrémité de la deuxième tubulure de raccordement.

16. Appareil de mesure selon l'une des revendications précédentes,
- comprenant en outre : au moins un excitateur de vibrations (41), notamment électromécanique ou électrodynamique, destiné à générer ou maintenir des vibrations mécaniques, notamment des vibrations de flexion, au moins de la première conduite de fluide (200), notamment à générer ou maintenir des vibrations mécaniques aussi bien de la première conduite de fluide (200) que de la deuxième conduite de fluide (300) ; et/ou
- comprenant en outre : au moins un premier capteur (51), notamment monté au moins sur la première conduite de fluide et/ou placé au moins à proximité de ladite conduite, lequel capteur est destiné à générer au moins un paramètre de signal (s1) - notamment électrique - correspondant à une grandeur de mesure d'un fluide guidé dans le système de conduite de fluide, à savoir au moins un paramètre de signal dépendant de ladite grandeur de mesure, notamment un niveau de signal dépendant de ladite grandeur de mesure et/ou une fréquence de signal dépendant de ladite grandeur de mesure et/ou un angle de phase dépendant de ladite grandeur de mesure.

17. Utilisation d'un appareil de mesure selon l'une des revendications précédentes, lequel appareil est destiné à déterminer des valeurs mesurées pour au moins une grandeur de mesure - notamment à savoir un débit massique, un débit volumique, un débit volumétrique, une densité, une viscosité ou une température - d'un produit fluide guidé dans une conduite, notamment d'un gaz, d'un liquide ou d'une dispersion, notamment de telle sorte que la première tubulure de raccordement est disposée côté entrée en ce qui concerne un sens d'écoulement du produit mis en écoulement à travers le transducteur et/ou que le produit est mis en écoulement dans un sens d'écoulement prédéfini à travers la conduite ainsi qu'à travers le transducteur intégré dans la même conduite.
